# EUROPÄISCHE PATENTSCHRIFT

(11) **EP 0 600 311 B1**
(45) Veröffentlichungstag und Bekanntmachung des Hinweises auf die Patenterteilung: **27.08.1997**
(21) Anmeldenummer: 93118568.0
(22) Anmeldetag: 18.11.1993
(51) Int. Cl.: H01H 47/00, F16P 3/00, G05B 9/03

(54) **Schaltungsanordnung zur elektrischen Sicherheitsüberwachung von Schalteinrichtungen**
Circuit for the safety monitoring of switching devices
Circuit pour la surveillance de la sécurité de dispostifs commutateurs

(30) Priorität: 28.11.1992 DE 4240071
(43) Veröffentlichungstag der Anmeldung: 08.06.1994
(73) Patentinhaber: SCHNEIDER ELECTRIC GMBH, 40880 Ratingen (DE)
(72) Erfinder: Schlicker, Michael, D-51580 Reichshof-Denklingen (DE); Stahl, Kurt, D-51647 Gummersbach (DE)
(74) Vertreter: Köhne, Friedrich, Dipl.-Ing.

(56) Entgegenhaltungen:
- EP-A- 0 048 848
- WO-A-83/02816
- DE-A- 3 919 558

## Beschreibung

Die Erfindung bezieht sich auf eine Schaltungsanordnung zur elektrischen Sicherheitsüberwachung von Schalteinrichtungen, wie Not-Aus-Schaltern, Lichtvorhängen, Lichtschranken, Endschaltern und Zweihandschaltern, entsprechend dem Oberbegriff des Anspruchs 1 (DE-A- 3919558).

Die bisher bekannten und auf dem Markt befindlichen Schaltungsanordungen dieser Gattung sind für jeden einzelnen Anwendungsfall speziell entwickelt. Dies gilt sowohl für Geräte, die sich vorwiegend durch eine mechanische Konstruktion auszeichnen, in der Relais und mechanische Funktionselemente überwiegen, als auch für elektrische Schaltungsanordnungen. Die Herstellung dieser unterschiedlichsten Geräte bedeutet einen großen Material- und vor allem Herstellungsaufwand. Dazu kommt, daß durch den jeweils separaten, ungleichen Aufbau ein erheblicher Aufwand für die Lagerhaltung entsteht. Vergleichbare Aufwendungen entstehen ferner, wenn die unterschiedlichsten bestehenden Geräte auf neue Vorschriften und Normen umgestellt werden müssen.

Die DE 39 19 558 A1, von der im vorliegenden Fall als nächstliegender Stand der Technik ausgegangen wird, offenbart eine Schaltungsanordnung für eine Pressensicherheitssteuerung. Diese Pressensicherheitssteuerung ist einkanalig ausgebildet und weist sichere sowie nicht sichere Strukturen, beispielsweise eine Speicher programmierbare Steuerung auf. Sicherheitsrelevante Befehlsgeräte sind bei dieser Schaltungsanordnung mit Sicherheitsmodulen und diese mit sicherheitsrelevanten Stellgliedern einkanalig verbunden. Hierbei sind den Zustand der Sicherheitsmodule ausweisende Ausgänge der Stellglieder auf Eingänge der Speicher programmierbaren Steuerung aufgeschaltet, deren synchronisierende Ausgänge mit Kontrollkreisen der Sicherheitsmodule verbunden sind. Zyklisch zu überwachende Ausgänge an jeweils zugeordnete Relais der Sicherheitsmodule sind direkt angeschlossen und deren nicht zyklisch zu überwachende Ausgänge sind in einem Einschaltkreis und in einem Strompfad angeordnet.

Somit offenbart diese Druckschrift eine Schaltungsanordnung für eine Pressensicherheitssteuerung, bestehend aus einer Speicher programmierbaren Steuerung und Sicherheitsmodulen in selbst überwachter verdrahtungsprogrammierter Kontaktschaltweise, wobei nur eine direkt einkanalige Aufschaltung der Ausgänge der sicherheitsrelevanten Befehlsgeräte vorgesehen ist. Es handelt sich somit um eine nicht sicherheitsgerichtete Speicher programmierbare Steuerung (programmierbarer Logikteil), die in klassischer Art durch eine Verschaltung mit in selbst überwachter verdrahtungsprogrammierter Kontaktschalttechnik ausgeführter Schutzeinrichtung abgesichert ist.

Die WO-A-8302816 offenbart eine elektronische Steuerung mit Sicherheitseinrichtungen. Diese elektronische Steuerung ist für eine Vorrichtung mit mechanischen Bewegungsabläufen mit zwei unterschiedlich aufgebauten Sicherheitskanälen vorgesehen, von denen der erste Sicherheitskanal mit fest verdrahteter Schaltungslogik und der zweite Sicherheitskanal in Mikrocomputertechnik ausgeführt ist. Die Steuerung weist für beide Sicherheitskanäle eine gemeinsame Sicherheitsstufe auf, die bei Auftreten unterschiedlicher Ausgangssignale an den Sicherheitskanälen die Vorrichtung in einen sicheren Zustand versetzt. Die Sicherheitskanäle übernehmen bei dieser Steuerung gleichzeitig gleichartige Steuerfunktionen. Ferner verfügt jeder Sicherheitskanal über Selbstüberwachungseinrichtungen, deren Signale zusammen mit dem Vergleichsergebnis aus einem Vergleich der Ausgangssignale der beiden Sicherheitskanäle auf eine Sicherheitsstufe wirken, die bei Auftreten von Fehlern die Vorrichtung in einen sicheren Zustand versetzt.

Es ist zu erkennen, daß es sich bei dieser vorbekannten Steuerung um eine elektronische Steuerung mit Sicherheitseinrichtungen für eine Vorrichtung mit mechanischen Bewegungsabläufen mit zwei unterschiedlich aufgebauten Sicherheitskanälen handelt, von denen der erste Sicherheitskanal mit fest verdrahteter Schaltungslogik und der zweite Sicherheitskanal in Computertechnik ausgeführt ist.

Der Erfindung liegt demgegenüber die Aufgabe zu Grunde, eine Schaltungsanordnung zu schaffen, die in ihrem grundsätzlichen Aufbau für die verschiedensten Anwendungsbereiche einsetzbar ist, dabei aber die spezielle Anpassung an jeden Anwendungsfall mit nur geringem Arbeitsaufwand durchführbar ist.

Die gestellte Aufgabe wird gelöst durch die Merkmale des Anspruchs 1.

Auf diese Weise wird für alle Anwendungsfälle des technischen Bereiches eine einzige elektronische Hardware geschaffen, deren Hauptbestandteil ein programmierbarer Baustein ist, dessen Programmierung letztlich über die endgültige Funktion entscheidet, d. h. die Hardware ist für alle unterschiedlichsten Anwendungsbereiche als einheitliches Produkt identisch und invariant. Die Varianz zur Anpassung an die jeweiligen Anwendungsfälle liegt ausschließlich in der Software, die zur Programmierung des programmierbaren Bausteines verwendet wird.

Vorteilhafte Ausgestaltungen der erfindungsgemäßen Schaltungsanordnung ergeben sich aus den Unteransprüchen.

In der Zeichnung sind Ausführungsbeispiele der erfindungsgemäßen Schaltungsanordnung in Form von Blockschaltbildern dargestellt, und zwar zeigen
Figur 1 ein Grundschaltbild in einfacher Ausführung,
Figur 2 ein Grundschaltbild entsprechend Figur 1, jedoch mit einer Erweiterung,
Figur 3 ein Grundschaltbild mit einer weiteren Erweiterung und
Figur 4 ein Schaltbild mit einer Anzahl Kanäle, die miteinander kreuzgekoppelt sind.

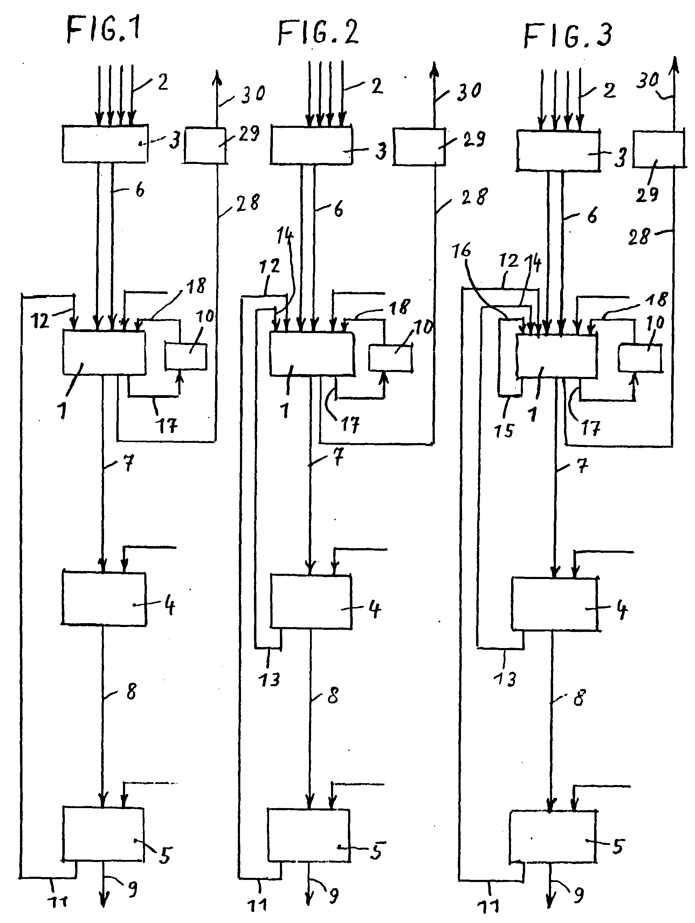

Figur 1 zeigt ein einfaches Ausführungsbeispiel einer Schaltungsanordnung, in der das wichtigste Bauelement ein programmierbarer Baustein 1 ist, dessen durch geeignete Software eingegebenes Programm auf einen bestimmten Anwendungsfall abgestimmt ist, so daß entsprechend den anliegenden Eingangssignalen und der vorgegebenen Programmierung für den Anwendungsfall geeignete Ausgangssignale erzeugt werden. Der programmierbare Baustein 1 ist austauschbar angeordnet, so daß die übrige nachfolgend erläuterte gesamte Schaltungsanordnung für die verschiedensten Lösungen invariant genutzt werden kann, und zwar dadurch, daß der vorhandene programmierbare Baustein durch einen anders programmierten Baustein ausgetauscht wird.

Als programmierbarer Baustein kann wahlweise je nach Anwendungsbereich der Schaltungsanordnung einer der Bausteine verwendet werden, die unter den Abkürzungsbezeichnungen PLA, EPROM, PROM, EEPROM oder µP im Handel erhältlich sind. Diese Kurzbezeichnungen, die in der Fachwelt Eingang gefunden haben, bedeuten sinngemäß:
- PLA: = programmable logic array
= programmierbares logisches UND - ODER Array
- EPROM: = erasible PROM
= mit UV-Licht löschbares PROM
- PROM: = programmable ROM
= programmierbares ROM
- ROM: = read only memory
= nur-lese Speicher, stromunabhängiger Speicher
- EEPROM: = electrically erasable PROM
= elektrisch löschbares PROM
- µP: = Microprocessor with internal or external ROM
= Mikroprozessor mit internem oder externem ROM
- Triac: = triode alternating current switch
= Trioden-Wechselstromschalter.

Dem programmierbaren Baustein 1 ist ein als Eingangsstufe 3 dienender Baustein vorgeschaltet, in welchem die vereinfacht durch Pfeile versinnbildlichten Eingangssignale 2 in ihrem Pegel auf den Arbeitsbereich der gesamten elektronischen Schaltung herabgesetzt und die gegebenenfalls auf den Eingangssignalen liegenden Störungen unterdrückt werden. Die Eingangssignale stammen normalerweise von den vorgeschalteten, nicht gezeichneten Schalteinrichtungen, wie z. B. den Not-Aus-Schaltern, den Lichtvorhängen, den Lichtschranken, den Endschaltern und den Zweihandschaltern und dergleichen, und zwar von den in diesen Schalteinrichtungen normalerweise enthaltenen öffner- und Schließer-Kontakten.

Die in der Eingangsstufe 3 herabgesetzten Eingangssignale werden dem zuvor erläuterten programmierbaren Baustein 1 zugeführt, der entsprechend seiner Programmierung und den anliegenden Eingangssignalen geeignete Ausgangssignale erzeugt. Die Programmierung dieses Bausteins 1 entscheidet darüber, ob die Hardware als eine der vorgenannten Schalteinrichtungen arbeitet. Der programmierbare Baustein 1 weist einen Ausgang 7 auf, welcher an einem nachgeschalteten Vergleicher 4, auch Komparator genannt, angeschlossen ist. Der Vergleicher 4 hat ebenfalls einen Ausgang 8, von dem eine Schaltvorrichtung 5 angesteuert wird. Der Ausgang der Eingangsstufe 3 ist mit dem Bezugszeichen 6 belegt. Als Schaltvorrichtung 5 kommen vorzugsweise elektromechanische Schalter, wie Relais oder Schütze, oder elektronische Halbleiter, wie Transistoren oder Thyristoren oder Triacs, in Betracht. Der Ausgang 9 der gewählten Schaltvorrichtung 5 schaltet die jeweilige Anwendung des Benutzers der Schaltungsanordnung.

Wie aus Figur 1 ersichtlich ist, ist vorteilhafterweise ein Ausgang 11 der Schaltvorrichtung 5 auf einen Eingang 12 des programmierbaren Bausteins 1 zurückgeführt, um Fehler des Ausgangs erkennen zu können.

Um ein bestimmtes Zeitverhalten, z. B. Ein/Aus-Verzögerungen usw. zu erzeugen, verfügt der programmierbare Baustein 1 über einen weiteren Ausgang 17, der zu einem einstellbaren Zeitzähler 10 führt. Je nach Ausführung des verwendeten Bausteins 1 kann auch vorteilhafterweise eine bausteininterne Realisierung des Zeitzählers vorgesehen werden. Nach Ablauf der am Zeitzähler gewählten Zeit ist der Ausgang des Zeitzählers auf einen Eingang 18 des programmierbaren Bausteins 1 zurückgeführt.

Um die Sicherheit der zuvor erläuterten elektronischen Schaltung nach Figur 1 zu erhöhen, können weitere Gegenkopplungen vorgesehen werden. So zeigt Figur 2 ein Blockschaltbild, welches im wesentlichen mit dem nach Figur 1 übereinstimmt, so daß auch für alle gleichen oder gleichwirkenden wirkenden Teile dieselben Bezugszeichen wie in Figur 1 worden sind. Dies gilt auch für die nachfolgend erläuterten Ausführungsbeispiele. In Figur 2 ist eine weitere Gegenkopplung dadurch geschaffen, daß ein Ausgang 13 des Vergleichers bzw. des Komparators 4 auf einen Eingang 14 des programmierbaren Bausteins 1 zurückgeführt ist. Auf diese Weise können Fehler der Vergleicher- bzw. Komparator-Stufe erkannt werden.

Bei dem Ausführungsbeispiel gemäß Figur 3 ist darüberhinaus noch eine weitere Gegenkopplung vorgesehen, wonach ein Ausgang 15 des programmierbaren Bausteins 1 auf einen seiner Eingänge 16 zurückgeführt ist. Auf diese Weise ist die Möglichkeit gegeben, daß der Baustein 1 eigene Fehler selbst erkennen kann. Mit diesen zuvor erläuterten Maßnahmen der Gegenkopplungen ist die Schaltungsanordnung in der Lage, sich selbst zu überprüfen.

Bei den Ausführungsbeispielen nach den Figuren 1, 2 und 3 bilden der Baustein der Eingangsstufe 3, der programmierbare Baustein 1, der Vergleicher bzw. Komparator 4 und die Schaltvorrichtung 5 einen Kanal, der ausschließlich durch Austausch des programmierbaren Bausteins 1 auf den jeweiligen Anwendungsfall veränderbar ist, so daß die gesamte übrige Schaltungsanordnung je nach Ausbau der Gegenkopplungen unverändert bleibt.

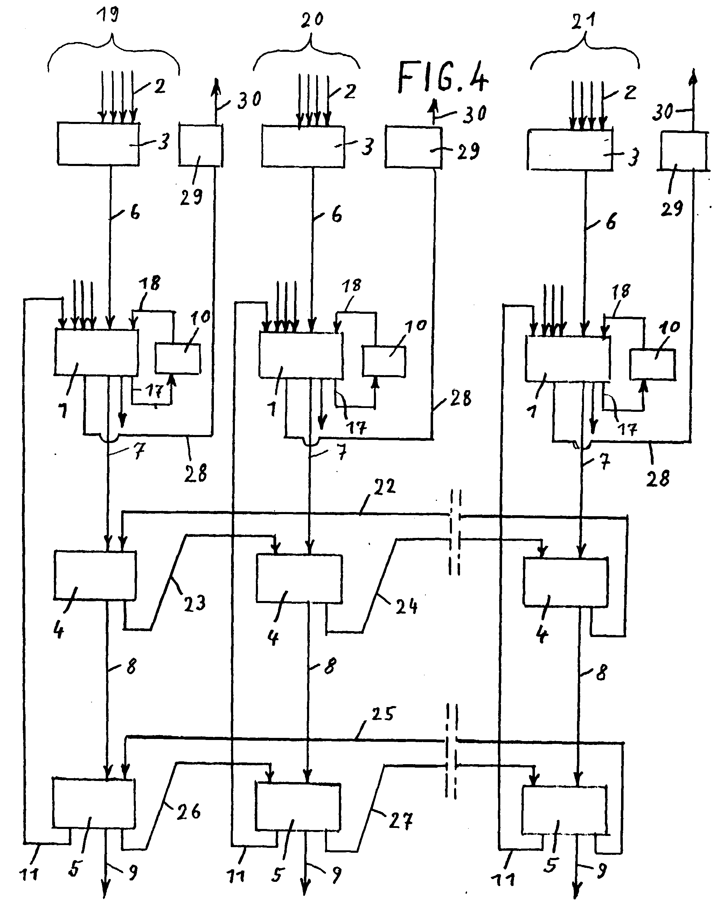

Figur 4 zeigt ein weiteres Ausführungsbeispiel einer Schaltungsanordnung mit zwei oder mehreren parallelen identischen Kanälen 19, 20 und 21. In Figur 4 sind drei Kanäle dargestellt. Wie aber die strichpunktierten Unterbrechungslinien andeuten, können auch noch weitere parallele Kanäle vorgesehen sein. Die dargestellten Kanäle entsprechen dem Ausführungsbeispiel nach Figur 1, so daß hier wiederum die gleichen Bezugszeichen verwendet worden sind. Vorteilhafterweise können diese Kanäle auch in verschiedenen bzw. unterschiedlichen Technologien ausgeführt werden, um durch ihre Unterschiedlichkeit die Sicherheit der Schaltungsanordnung gegen gleiche bzw. ähnliche Fehler zu erhöhen. Stattdessen können aber auch die Kanäle gemäß den Figuren 2 oder 3 Verwendung finden. Die Sicherheit der gesamten Schaltungsanordnung wird dadurch wesentlich erhöht, daß die Kanäle 19, 20, 21 Kreuzkopplungen 22, 23, 24, 25, 26 und 27 aufweisen, derart, daß den jeweiligen programmierbaren Bausteinen 1 und / oder den Vergleichern bzw. Komparatoren 4 und / oder den Schaltvorrichtungen 5 neben den Informationen des eigenen Kreises auch die Ausgangsinformationen der entsprechenden benachbarten Kreise zum Vergleich zugeführt werden. In Figur 4 sind zu den programmierbaren Bausteinen 1 keine Kreuzkopplungen gezeichnet, die aber auch hier entsprechend den Vergleichern bzw. Komparatoren 4 und den Schaltvorrichtungen 5 entsprechend vorgesehen werden können. Dadurch, daß neben den Informationen des eigenen Kreises auch die Ausgangsinformationen der Kreise der benachbarten Kanäle zum Vergleich zugeführt werden, kann erreicht werden, daß die Schaltungsanordnung nur dann frei schaltet, wenn mindestens zwei oder mehr Kanäle den gleichen Informationsinhalt aufweisen. Auf diese Weise ist es möglich, mit zwei Kanälen einen Fehler zu erkennen bzw. mit drei Kanälen einen Fehler zu erkennen und zusätzlich zu korrigieren.

Die Redundanz kann noch dadurch erhöht werden, daß der gegenseitige Austausch der Informationen zwischen den Kanälen 19, 20 und 21 auf unterschiedlichem Niveau oder dynamisch vorgenommen wird. Auf diese Weise können die Ausgänge des programmierbaren Bausteins 1 dazu benutzt werden, die benachbarten programmierbaren Bausteine über seinen Informationsinhalt bzw. Status zu informieren. Ferner kann der Ausgang des Vergleichers bzw. Komparators 4 dazu genutzt werden, die benachbarten Vergleicher bzw. Komparatoren freizugeben oder zu sperren. Ferner kann der Ausgang der Schaltvorrichtung 5 genutzt werden, um auch benachbarte Schaltvorrichtungen entsprechend zu sperren oder freizugeben.

Wie aus den Zeichnungen ersichtlich ist, ist bei allen zuvor erläuterten Schaltungsanordnungen von Vorteil, daß ein elektronisches Schaltorgan 29 vorgesehen ist, welches über einen der Ausgänge 28 des programmierbaren Bausteins 1 angesteuert ist. Als Schaltorgan 29 kann vorteilhafterweise ein Transistor oder ein Thyristor oder ein Triac vorgesehen werden. Desweiteren ist folgendes von Bedeutung. Um die vorgeschalteten Schalteinrichtungen wechselseitig abfragen zu können und gleichzeitig eine Bruch- und / oder Querschluß-Erkennung durchführen zu können, werden die Schalteinrichtungen über die jeweiligen Ausgänge 30 reihum mit Spannung versorgt. Dies geschieht vorteilhafterweise über das vorgenannte elektronische Schaltorgan 29, welches über den Ausgang 28 des programmierbaren Bausteins 1 angesteuert wird.

## Patentansprüche

1. Schaltungsanordnung zur elektrischen Sicherheitsüberwachung von Schalteinrichtungen, wie Not-Aus-Schaltern, Lichtvorhängen, Lichtschranken, Endschaltern und Zweihandschaltern, mit einem programmierbaren Baustein (1), dessen eingegebenes Programm auf einen bestimmten Anwendungsfall abgestimmt ist, so daß entsprechend den anliegenden Eigangssignalen (2) und der Programmierung für den Anwendungsfall geeignete Ausgangssignale erzeugt werden,
**gekennzeichnet durch**
zumindest einem weiteren programmierbaren Baustein (1), der derart mit dem ersten programmierbaren Baustein (1) geschaltet ist, daß die beiden Bausteine (1) sich selbst und gegenseitig überwachen, wobei die programmierbaren Bausteine (1) identische oder diversitäre Programme aufweisen, jeweils einem Kanal (19, 20, 21) zugeordnet und einzeln für sich austauschbar sind.

2. Schaltungsanordnung nach Anspruch 1,
**dadurch gekennzeichnet,**
daß dem programmierbaren Baustein (1) ein als Eingangsstufe (3) dienender Baustein vorgeschaltet ist, in welchem die Eingangssignale (2) in ihrem Pegel auf den Arbeitsbereich der gesamten elektronischen Schaltung herabgesetzt und die gegebenenfalls auf den Eingangssignalen liegenden Störungen unterdrückt werden.

3. Schaltungsanordnung nach Anspruch 1 oder 2,
**dadurch gekennzeichnet,**
daß der programmierbare Baustein (1) einen Ausgang (7) aufweist, welcher an einen Vergleicher (Komparator) (4) angeschlossen ist, dessen Ausgang (8) eine Schaltvorrichtung (5) ansteuert.

4. Schaltungsanordnung nach einem der vorhergehenden Ansprüche,
**dadurch gekennzeichnet,**
daß ein Ausgang (11) der Schaltvorrichtung (5) auf einen Eingang (12) des programmierbaren Bausteins (1) zurückgeführt ist.

5. Schaltungsanordnung nach einem der vorhergehenden Ansprüche,
**dadurch gekennzeichnet,**
daß ein Ausgang (13) des Vergleichers (Komparators) (4) auf einen Eingang (14) des programmierbaren Bausteins (1) zurückgeführt ist.

6. Schaltungsanordnung nach einem der vorhergehenden Ansprüche,
**dadurch gekennzeichnet,**
daß ein Ausgang (15) des programmierbaren Bausteins (1) auf einen seiner Eingänge (16) zurückgeführt ist.

7. Schaltungsanordnung nach einem der vorhergehenden Ansprüche,
**dadurch gekennzeichnet,**
daß ein Ausgang (17) des programmierbaren Bausteins (1) über einen einstellbaren Zeitzähler (10) auf einen seiner Eingänge (18) zurückgeführt ist.

8. Schaltungsanordnung nach einem der vorhergehenden Ansprüche,
**dadurch gekennzeichnet,**
daß der Baustein der Eingangsstufe (3), der programmierbare Baustein (1), der Vergleicher (Komparator) (4) und die Schaltvorrichtung (5) einen Kanal bilden, der ausschließlich durch Austausch des programmierbaren Bausteins (1) auf den jeweiligen Anwendungsfall veränderbar ist.

9. Schaltungsanordnung nach Anspruch 8,
**dadurch gekennzeichnet,**
daß die Kanäle (19, 20, 21) derart kreuzgekoppelt (22 bis 27) sind, daß den jeweiligen programmierbaren Bausteinen (1) und / oder den Vergleichern (Komparatoren) (4) und / oder den Schaltvorrichtungen (5) neben den Informationen des eigenen Kreises auch die Ausgangsinformationen der entsprechenden benachbarten Kreise zum Vergleich zugeführt werden.

10. Schaltungsanordnung nach Anspruch 9,
**dadurch gekennzeichnet,**
daß der gegenseitige Austausch der Informationen zwischen den Kanälen (19, 10, 21) auf unterschiedlichem Niveau vorgenommen wird.

11. Schaltungsanordnung nach einem der vorhergehenden Ansprüche,
**dadurch gekennzeichnet,**
daß als programmierbarer Baustein (1) wahlweise ein PLA, EPROM, PROM, EEPROM oder µP verwendet wird.

12. Schaltungsanordnung nach einem der Ansprüche 3 bis 11,
**dadurch gekennzeichnet,**
daß als Schaltvorrichtung (5) ein elektromechanischer Schalter, wie ein Relais oder ein Schütz, oder ein elektronischer Halbleiter, wie ein Transistor oder ein Thyristor oder ein Triac, verwendet wird.

13. Schaltungsanordnung nach einem der vorhergehenden Ansprüche,
**dadurch gekennzeichnet,**
daß ein elektronisches Schaltorgan (29) vorgesehen ist, welches über einen der Ausgänge (28) des programmierbaren Bausteins (1) angesteuert ist.

14. Schaltungsanordnung nach Anspruch 13,
**dadurch gekennzeichnet,**
daß als Schaltorgan (29) ein Transistor, Thyristor oder Triac vorgesehen ist.

## Claims

1. Circuit arrangement for the electrical safety monitoring of switching devices such as emergency switches, light curtains, light barriers, limit switches and two-hand switches, comprising a programmable module (1) of which the input program is matched for a particular application so that output signals which are suitable for that application are produced corresponding to the input signals (2) applied and to the programming, characterized by at least one additional module (1) which is connected with said first programmable module (1) in such a manner that both said modules (1) are self- and mutually monitoring, wherein said modules (1) include identical or diverse programs, are respectively allocated to one channel (19, 20, 21) and are individually exchangeable for themselves.

2. Circuit arrangement according to claim 1, characterized in that said programmable module (1) has connected in series a module serving as an input stage (3) in which the input signals (2) are reduced of their level to the working range of the entire electronic circuit and in which the disturbances present in case on the input signals are suppressed.

3. Circuit arrangement according to claim 1 or 2, characterized in that the programmable module (1) includes an output (7) which is connected with a comparison means (comparator) (4) of which the output (8) drives a switching device (5).

4. Circuit arrangement according to one of the preceding claims, characterized in that an output (11) of the switching device (5) is retraced to an input (14) of the programmable module (1).

5. Circuit arrangement according to one of the preceding claims, characterized in that an output (13) of the comparison means (comparator) (4) is retraced to an input (14) of the programmable module (1).

6. Circuit arrangement according to one of the preceding claims, characterized in that an output (15) of the programmable module (1) is retraced to one of the inputs (16) thereof.

7. Circuit arrangement according to one of the preceding claims, characterized in that an output (17) of the programmable module (1) is retraced to one of the inputs (18) thereof through an adjustable time meter (10).

8. Circuit arrangement according to one of the preceding claims, characterized in that the module of the input stage (3), the programmable module (1), the comparison means (comparator) (4) and the switching device (5) form a channel adapted to be modified for the respective application exclusively by exchanging said programmable module (1).

9. Circuit arrangement according to claim 8, characterized in that the channels (19, 20, 21) are cross-coupled (22 to 27) in such a manner that the respective programmable modules (1) and/or the comparison means (comparators) (4) and/or the switching devices (5) are supplied, in addition to information from their own circuit, also with output information from the corresponding neighbouring circuits for comparison.

10. Circuit arrangement according to claim 9, characterized in that the mutual exchange of information between the channels (19, 10, 21) is effected on a different level.

11. Circuit arrangement according to one of the preceding claims, characterized in that a PLA, EPROM, PROM, EEPROM or µP are selectively used for the programmable module (1).

12. Circuit arrangement according to one of the claims 3 to 11, characterized in that for the switching device (5) an electro-mechanical switch, such as a relay or contactor, or an electronic semiconductor, such as a transistor or a thyristor or a triac, are used.

13. Circuit arrangement according to one of the preceding claims, characterized in that an electronic switching member (29) is provided which is driven through one of the outputs (28) of the programmable module (1).

14. Circuit arrangement according to claim 13, characterized in that a transistor, thyristor or triac are provided as the said switching member (29).

## Revendications

1. Circuit pour la surveillance de la sécurité électrique de dispositifs de commutation comme d'interrupteurs d'urgence, de rideaux de lumière, de barrages photoélectriques, de commutateurs de fin de course et de commutateurs à deux mains, avec un composant programmable (1) dont le programme entré est adapté à un cas d'application défini si bien que des signaux de sortie appropriés au cas d'application sont générés conformément aux signaux d'entrée (2) présents et à la programmation,
**caractérisé par**
au moins un autre composant programmable (1) qui est commuté avec le premier composant programmable (1) de telle manière que les deux composants (1) se surveillent eux-mêmes et mutuellement, les composants programmables (1) présentant des programmes identiques ou en diversité, étant affectés respectivement à un canal (19, 20, 21) et étant remplaçables individuellement pour soi.

2. Circuit selon la revendication 1,
**caractérisé en ce**
qu'en amont du composant programmable (1) il est placé un composant qui sert d'étage d'entrée (3) dans lequel les signaux d'entrée (2) sont diminués quant à leur niveau à la plage d'opération de l'ensemble du circuit électronique et les dérangements qui reposent éventuellement sur les signaux d'entrée sont supprimés.

3. Circuit selon la revendication 1 ou 2,
**caractérisé en ce**
que le composant programmable (1) présente une sortie (7) qui est raccordée à un comparateur (4) dont la sortie (8) excite un dispositif de commutation (5).

4. Circuit selon l'une des revendications précédentes,
**caractérisé en ce**
qu'une sortie (11) du dispositif de commutation (5) est ramenée à une entrée (12) du composant programmable (1).

5. Circuit selon l'une des revendications précédentes,
**caractérisé en ce**
qu'une sortie (13) du comparateur (4) est ramenée à une entrée (14) du composant programmable (1).

6. Circuit selon l'une des revendications précédentes,
**caractérisé en ce**
qu'une sortie (15) du composant programmable (1) est ramenée à l'une de ses entrées (16).

7. Circuit selon l'une des revendications précédentes,
**caractérisé en ce**
qu'une sortie (17) du composant programmable (1) est ramenée par un compteur de temps réglable (10) à l'une de ses entrées (18).

8. Circuit selon l'une des revendications précédentes,
**caractérisé en ce**
que le composant de l'étage d'entrée (3), le composant programmable (1), le comparateur (4) et le dispositif de commutation (5) forment un canal qui ne peut être modifié sur le cas d'application respectif que par remplacement du composant programmable (1).

9. Circuit selon la revendication 8,
**caractérisé en ce**
que les canaux (19, 20, 21) sont couplés en croix (22 à 27) de telle manière qu'en plus des informations du circuit propre les informations de sortie des circuits voisins correspondants sont également amenés pour comparaison aux composants programmables respectifs (1) et/ou aux comparateurs (4) et/ou aux dispositifs de commutation (5).

10. Circuit selon la revendication 9,
**caractérisé en ce**
que le remplacement mutuel des informations entre les canaux (19, 20, 21) est effectué à un niveau différent.

11. Circuit selon l'une des revendications précédentes,
**caractérisé en ce**
qu'au choix un réseau logique programmable, une mémoire EPROM, PROM, EEPROM ou un microprocesseur est utilisé comme composant programmable.

12. Circuit selon l'une des revendications 3 à 11,
**caractérisé en ce**
qu'un commutateur électromécanique, comme un relais ou un contacteur, ou un semiconducteur électronique, comme un transistor ou un thyristor ou un thyristor triode bidirectionnel, est utilisé comme dispositif de commutation (5).

13. Circuit selon l'une des revendications précédentes,
**caractérisé en ce**
qu'il est prévu un organe de commutation électronique (29) qui est excité par l'une des sorties (28) du composant programmable (1).

14. Circuit selon la revendication 13,
**caractérisé en ce**
qu'un transistor, un thyristor ou un thyristor triode bidirectionnel est prévu comme organe de commutation (29).
